# EUROPEAN PATENT APPLICATION

(11) **EP 4 768 750 A1**
(43) Date of publication of application: **01.07.2026**
(21) Application number: 25220390.6
(22) Date of filing: 03.12.2025
(51) Int. Cl.: F16F 13/10

(54) **LIQUID-SEALED MOUNT**

(30) Priority: 26.12.2024 JP 2024230717
(71) Applicant: Sumitomo Riko Company Limited, Komaki-shi, Aichi 485-8550 (JP)
(72) Inventor: ITO, Keita, Toyota-shi, 471-8571 (JP); SAKANISHI, Ryutaro, Komaki-shi, 485-8550 (JP); HATANAKA, Keishi, Komaki-shi, 485-8550 (JP); SONOBE, Shuya, Komaki-shi, 485-8550 (JP)
(74) Representative: Kuhnen & Wacker Patent- und Rechtsanwaltsbüro PartG mbB

(57) **Abstract**

A liquid-sealed mount (10) includes a body (12) having one end closed by a body rubber (14) and the other end closed by a diaphragm (16), a membrane (34) which partitions an inside of the body (12) into a first liquid chamber (22f) and a second liquid chamber (22s), a plurality of crosspieces (44) placed on both sides in an axial direction of the membrane (34) with the membrane (34) therebetween, and extending radially with a predetermined point as a center, and a passage (33) which communicates the first liquid chamber (22f) and the second liquid chamber (22s). The membrane (34) has at least one protrusion group (52) formed from a plurality of protrusions placed on a circle which is approximately concentric with the predetermined point, and the at least one protrusion group (52) satisfies the condition y > 2x + 2a when an average value of spacing between protrusions (50) adjacent in a circumferential direction is x, a diameter of the protrusion (50) is a, and a width of the crosspiece (44) is y.

## Description

### CROSS REFERENCE TO RELATED APPLICATION

This application claims priority to Japanese Patent Application No. 2024-230717 filed on December 26, 2024, which is incorporated herein by reference in its entirety including the specification, claims, drawings, and abstract.

### TECHNICAL FIELD

The present disclosure relates to a liquid-sealed mount which supports, in a vehicle, a vehicle-mounted unit, and which attenuates input vibration.

### BACKGROUND

In the related art, liquid-sealed mounts for supporting a vehicle-mounted unit are widely known. JP 2008-202766 A discloses a liquid-sealed mount which comprises a liquid chamber closed by a rubber-like elastic element and a diaphragm, an elastic partition membrane which partitions the liquid chamber into two liquid chambers, and an orifice that communicate the two partitioned liquid chambers. In JP 2008-202766 A, in order to prevent excessive deformation of the partition membrane, a plurality of crosspieces are placed on both sides of the partition membrane. In addition, in JP 2008-202766 A, a plurality of protrusions are provided on the surface of the partition membrane.

With such a configuration, a contact area when the partition membrane contacts the crosspiece can be reduced, and undesirable sounds resulting from such contact can be suppressed. The technique of JP 2008-202766 A, however, does not give sufficient consideration to the relationship between placement conditions of the protrusions, in particular, spacing of the protrusions, or the width of the crosspieces. As a result, there are cases in which, with the technique of JP 2008-202766 A, the protrusions cannot be stably contacted with the crosspieces.

An advantage of the present disclosure lies in provision of a liquid-sealed mount which enables protrusions to stably contact crosspieces and to thereby more effectively suppress noise.

### SUMMARY

According to one aspect of the present disclosure, there is provided a liquid-sealed mount comprising a body having one end closed by a body rubber and the other end closed by a diaphragm; a membrane that partitions an inside of the body into a first liquid chamber and a second liquid chamber; a plurality of crosspieces placed on both sides in an axial direction of the membrane with the membrane therebetween, and extending radially with a predetermined point as a center; and a passage that communicates the first liquid chamber and the second liquid chamber, wherein the membrane has at least one protrusion group formed from a plurality of protrusions placed on a circle which is approximately concentric with the predetermined point, and the at least one protrusion group satisfies a condition of y > 2x + 2a when an average value of spacing between protrusions adjacent in a circumferential direction is x, a diameter of the protrusion is a, and a width of the crosspiece is y.

With such a configuration, because at least two protrusions are positioned within the width of one crosspiece, the protrusions stably contact the crosspiece, and undesirable sound can be suppressed.

### BRIEF DESCRIPTION OF DRAWINGS

Embodiments of the present disclosure will be described based on the following figures, wherein:
FIG. 1 is a cross-sectional diagram of a liquid-sealed mount, and an exploded perspective diagram of an orifice unit;
FIG. 2 is a plan view of a membrane; and
FIG. 3 is a schematic cross-sectional diagram of FIG. 2 along a line A-A, and showing a comparative example.

### DESCRIPTION OF EMBODIMENTS

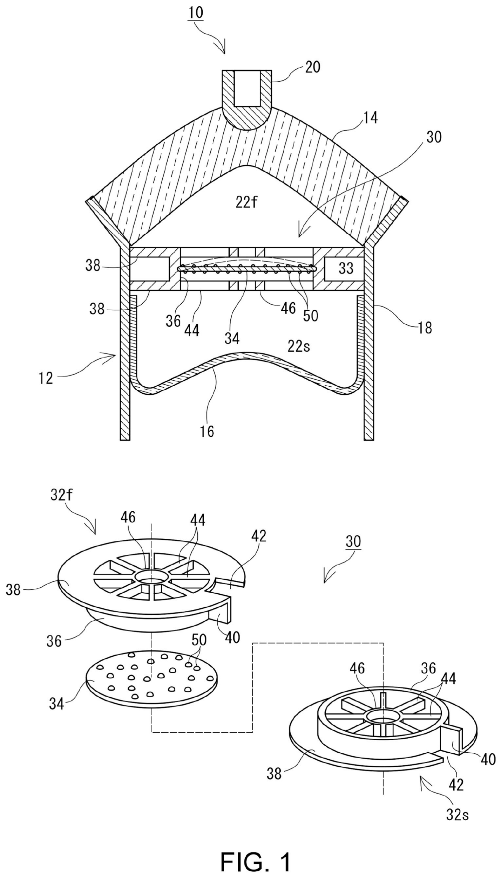

A structure of a liquid-sealed mount 10 will now be described with reference to the drawings. FIG. 1 is a cross-sectional diagram of the liquid-sealed mount 10, and an exploded perspective diagram of an orifice unit 30. The liquid-sealed mount 10 is used in a vehicle for attaching a vehicle-mounted unit such as an engine (not shown) on a vehicle body. In addition, the liquid-sealed mount 10 absorbs and attenuates vibration caused in the vehicle body or in the vehicle-mounted unit, to cause the vibration to quickly subside, and to thereby support the vehicle-mounted unit in a stable state.

The liquid-sealed mount 10 comprises a body 12 and the orifice unit 30. The body 12 further comprises a housing 18 of approximately tubular shape, a body rubber 14, and a diaphragm 16. The body rubber 14 is a member formed from a rubber-like elastic element, and closes one end in an axial direction of the housing 18. On the body rubber 14, a fastening portion 20 fastened to the vehicle-mounted unit or the vehicle body is provided. The body rubber 14 has elasticity to an extent that the body rubber 14 deforms upon receiving vibration of the vehicle-mounted unit or the vehicle body. The diaphragm 16 is a membrane-like member which closes the other end in the axial direction of the housing 18. The diaphragm 16 has flexibility to an extent that the diaphragm 16 deforms according to a change of pressure inside the body 12. A periphery of the diaphragm 16 is liquid-tightly fixed to an inner circumferential surface of the housing 18. Non-compressive liquid is filled inside the body 12.

The orifice unit 30 is placed in the body 12. The orifice unit 30 divides the inside of the body 12 into two spaces in the axial direction, and forms a passage 33 which communicates the two spaces. In the following, a space above the orifice unit 30 will be referred to as a "first liquid chamber 22f', and a space below the orifice unit 30 will be referred to as a "second liquid chamber 22s". In the present embodiment, the orifice unit 30 is formed from a first orifice member 32f, a second orifice member 32s, and a membrane 34.

The first orifice member 32f and the second orifice member 32s have a similar structure, but inverted in an up-and-down direction. In the following, the indices "f" and "s" will be omitted from the first orifice member 32f and the second orifice member 32s except when the orifice members are distinguished, and the first and second orifice members 32f and 32s will be simply referred to as an "orifice member 32". The orifice member 32 has a tubular portion 36, a flange 38, and a plurality of crosspieces 44. The flange 38 extends from an outer circumferential surface of the tubular portion 36 to an inner circumferential surface of the body 12. The two orifice members 32f and 32s are overlapped in the up-and-down direction with the membrane 34 therebetween, and are fixed in this state. Thus, between the two flanges 38 aligned in the up-and-down direction, is formed the passage 33, which is surrounded by the two flanges 38, the outer circumferential surface of the tubular portion 36, and the inner circumferential surface of the body 12. On each flange 38, a partitioning wall 40 is formed which extends upright from the surface of the flange 38 and which divides the passage 33. In addition, a notch, that is, an inlet/outlet 42, is formed near the flange 38 and adjacent to the partitioning wall 40. Liquid flowing from the first liquid chamber 22f to the second liquid chamber 22s passes from the first liquid chamber 22f through the inlet/outlet 42 of the first orifice member 32f, enters the passage 33, passes through the inlet/outlet 42 of the second orifice member 32s, and enters the second liquid chamber 22. When the liquid flows from the second liquid chamber 22s toward the first liquid chamber 22f, the liquid flows in a reverse path.

The membrane 34 is provided between the two tubular portions 36. The membrane 34 is a membrane which divides the tubular portion 36 in the axial direction. The membrane 34 is flexible to an extent that it deforms when pressures of the liquid chambers 22f and 22s change. On surfaces of the membrane 34 (both an upper surface and a lower surface), a plurality of protrusions 50 are provided, which will be described later.

On both sides in the axial direction of the membrane 34, a connection ring 46 and a plurality of crosspieces 44 are provided. The connection ring 46 is placed concentric with the tubular portion 36, and the plurality of crosspieces 44 are bridged between the connection ring 46 and the tubular portion 36. The plurality of crosspieces 44 are placed radially, centered around the connection ring 46. In the example configuration of FIG. 1, eight crosspieces 44 are aligned with equal spacing.

Next, an operation of the liquid-sealed mount 10 will be briefly described. A case will be considered in which the vehicle-mounted unit fastened to the liquid-sealed mount 10 vibrates, and the body rubber 14 is pulled strongly toward the upper side. In this case, the volume of the first liquid chamber 22f increases, and the pressure in the first liquid chamber 22f is reduced. With the reduction of pressure in the first liquid chamber 22f, liquid in the second liquid chamber 22s moves through the passage 33 to the first liquid chamber 22f. In such a case, the diaphragm 16 deforms upward, that is, in the direction to reduce a volume of the second liquid chamber 22s, in order to resolve the reduction of the inner pressure of the second liquid chamber 22s.

Another case will be considered in which, with vibration of the vehicle-mounted unit, the body rubber 14 is strongly depressed toward the lower side. In this case, an operation opposite from that when the body rubber 14 moves upward is caused. That is, the volume of the first liquid chamber 22f is reduced, and the pressure in the first liquid chamber 22f increases. With the increase in the pressure of the first liquid chamber 22f, the liquid in the first liquid chamber 22f moves through the passage 33 to the second liquid chamber 22s. Then, in order to resolve the increase in the inner pressure of the second liquid chamber 22s, the diaphragm 16 deforms downward, that is, in the direction to increase the volume of the second liquid chamber 22s.

In this manner, when large vibrations are caused, for example, when the vehicle jolts upward or downward over a speed bump or on a rough road, the movement of the liquid between the first liquid chamber 22f and the second liquid chamber 22s rapidly attenuates the vibration, which quickly subsides. With this configuration, the vibration of the vehicle-mounted unit is effectively suppressed, and the vehicle-mounted unit is stably supported.

However, there has been a problem that the vibration may be unnecessarily prolonged, and thus worsened., when movement of the liquid occurs even when the vibration input to the liquid-sealed mount 10 is small. For example, if movement of the liquid occurs while the vehicle is idling or when a small fluctuation occurs during traveling on an ordinary road surface, the vibration is only worsened and prolonged.

In consideration of this, the present example provides the membrane 34 inside the tubular portion 36 in order to prevent movement of the liquid between the first liquid chamber 22f and the second liquid chamber 22s when the vibration is small. When the vibration is small and an amount of deformation of the body rubber 14, and, consequently, change in volume of the first liquid chamber 22f, is small, the change in volume is absorbed by deformation of the membrane 34. That is, when the body rubber 14 is weakly pulled toward the upper side, the membrane 34 deflects in a shape to convex upward, and, when the body rubber 14 is weakly pressed toward the lower side, the membrane 34 deflects in a shape to convex downward. In this manner, small pressure changes due to a small volume change of the first liquid chamber 22f are absorbed, movement of the liquid is suppressed, and, as a result, exaggeration of the vibration is prevented.

Here, the crosspieces 44 are provided on both sides of the membrane 34 in order to and prevent excessive deformation of the membrane 34 by restricting the amount of deformation of the membrane 34. As the membrane 34 contacts the crosspiece 44, further deformation of the membrane 34 is prevented, and application of an excessive load on the membrane 34 is prevented.

When the membrane 34 contacts the crosspiece 44, a sound is naturally generated. When the sound is large, comfortability of passengers is reduced. In consideration of this, in the present embodiment, a plurality of protrusions 50 are provided on the surface of the membrane 34. As the protrusion 50 has a hemispherical shape, only the peak of the protrusion 50, and therefore of the membrane 34, contacts the crosspiece 44. In other words, by providing the protrusion 50, the contact area between the membrane 34 and the crosspiece 44 is reduced. With this configuration, undesirable sounds from the membrane 34 contacting the crosspiece 44 can be reduced.

However, when the protrusions 50 are not appropriately sized or spaced, there is a possibility that a protrusion 50 will not contact the crosspiece 44 smoothly, and the undesirable sound will not be sufficiently suppressed. In consideration of this, in the present embodiment, the placement spacing and the size of the protrusion 50 are set in such a manner that each protrusion 50 can contact the crosspiece 44 smoothly. This configuration will now be described.

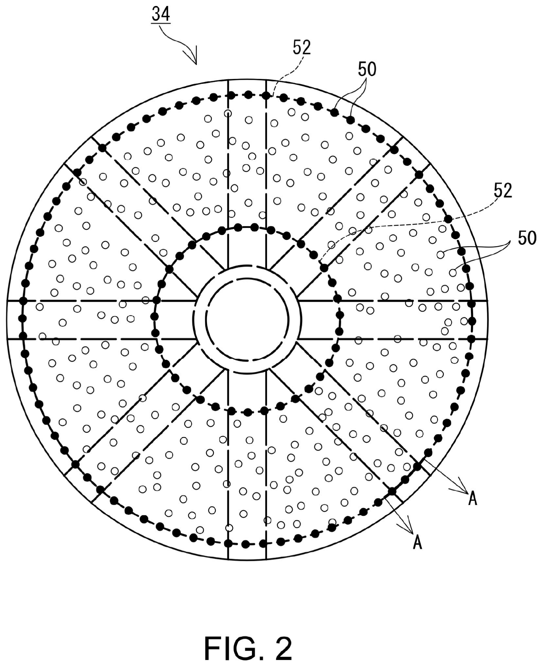

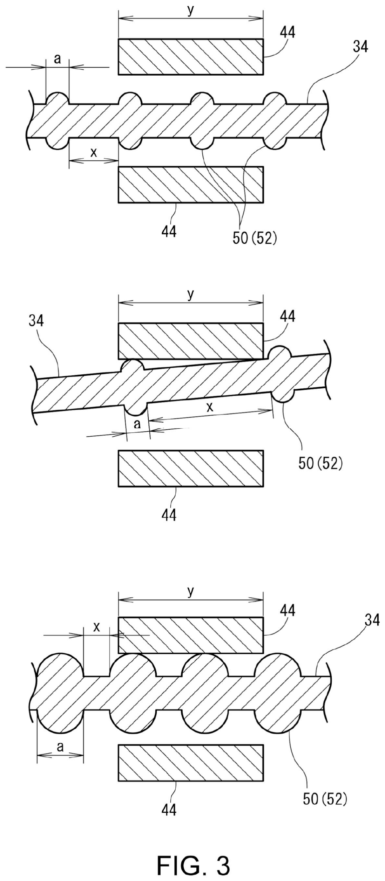

FIG. 2 is a plan view of the membrane 34. The dash-dot-dot line of FIG. 2 indicates shapes of the connection ring 46 and the crosspiece 44. FIG. 3 is a schematic cross-sectional diagram of FIG. 2 along a line A-A.

As shown in FIG. 2, the membrane 34 has, in addition to a plurality of protrusions 50 which are randomly placed, one or more protrusion groups 52. In FIG. 2, the hollow circles indicate protrusions 50 which are randomly placed, while the dark circles indicate protrusions 50 belonging to the protrusion group 52. Each protrusion group 52 has a plurality of protrusions 50 arranged in circles approximately concentric with the center of the tubular portion 36 (that is, a center of a radiating shape formed by the crosspieces 44). In the example configuration illustrated in FIG. 2, the membrane 34 has two protrusion groups 52.

In the protrusion group 52, the protrusions 50 are placed in such a manner that the condition y ≥ 2x + 2a is satisfied, where x represents spacing between two adjacent protrusions 50, a represents a diameter of the protrusion 50, and y represents a width in the circumferential direction of the crosspiece 44. When such a placement is employed, as shown at an upper part of FIG. 3, two or more protrusions 50 are always positioned within the width of one crosspiece 44. With this configuration, the orientation of the membrane 34 is stabilized, and contact of the underlying surface of the membrane 34 with the crosspiece 44 is prevented.

That is, when the spacing x of protrusions 50 is large and only one protrusion 50 is present on the crosspiece 44 within the width of the crosspiece 44, as shown in the middle of FIG. 3, the membrane 34 is inclined with the one protrusion 50 acting as a fulcrum, and there is a possibility that the surface of the membrane 34 contacts the crosspiece 44. In such cases the contact area is increased, and undesirable sounds will increase consequently. On the other hand, with the placement satisfying the condition y ≥ 2x + 2a as in the present embodiment, such inclination of the membrane 34, and therefore undesirable sounds, can be suppressed.

Further, in the present embodiment, the diameter a of the protrusion 50 is set to be smaller than the placement spacing x. Such a configuration is employed for the following reason. As shown at a lower part of FIG. 3, when the diameter a of the protrusion 50 is large, a radius of curvature at the vertex of the protrusion 50 is also large, and the area of contact of the protrusion 50 with the crosspiece 44 tends to become large. In addition, when the condition y ≥ 2x + 2a is to be satisfied while the diameter a is increased, the spacing x between the protrusions 50 must be set smaller. With a larger diameter a of the protrusion 50 and a smaller spacing x, an average value of a thickness of the membrane 34 as a whole becomes large, undesirably impairing the flexibility of the membrane 34. To the contrary, when the parameters a and x are set such that a < x as in the present embodiment and illustrated at the upper part of FIG. 3, the area of contact of the protrusion 50 with the crosspiece 44 can be maintained small, and a high flexibility of the membrane can be maintained.

One or a plurality of the protrusion groups 52 may be provided on each side of the membrane 34. All of a plurality of protrusion groups 52 (that is, a plurality of groups of protrusions arranged on circles) on one side of the membrane 34 may satisfy the conditions y ≥ 2x + 2a and x > a. As an alternative configuration, only some of the plurality of protrusion groups 52 may satisfy the conditions y ≥ 2x + 2a and x > a. In such a case, desirably, at least a protrusion group 52 positioned at the innermost circumferential side satisfies the conditions y ≥ 2x + 2a and x > a. This is because the protrusion group 52 at an inner circumferential side tends to more easily collide with the crosspiece 44. That is, as shown by a dash-dot-dot line in the upper part of FIG. 1, when the membrane 34 deflects, a region near the center of the membrane 34 deflects to the largest extent, and tends to contact the crosspiece 44. Thus, desirably, the protrusions 50 are placed so that y ≥ 2x + 2a and x > a are satisfied at locations which tend to contact the crosspiece 44. With such a configuration, undesirable sound can be suppressed while ensuring the protrusion 50 and the crosspiece 44 stably contact each other.

As another configuration, the protrusions 50 may be placed in such a manner that the conditions y ≥ 2x + 2a and x > a are satisfied at least in the protrusion group 52 at the outermost circumferential side among the plurality of protrusion groups 52. As yet another configuration, the protrusions 50 may be placed in such a manner that the conditions y ≥ 2x + 2a and x > a are satisfied in at least both the protrusion group 52 at the innermost circumferential side and the protrusion group 52 at the outermost circumferential side among the plurality of protrusion groups 52. With such configurations, because the protrusions 50 contact the crosspiece 44 at two points in the radial direction, the possibility of the surface itself of the membrane 34 contacting the crosspiece 44 can be reduced. With such a configurations, undesirable sounds can be suppressed more effectively.

In the above description, in addition to the protrusions 50 belonging to the protrusion group 52, protrusions 50 which are randomly placed are also provided. However, as long as the membrane 34 has at least one protrusion group 52, the randomly-placed protrusions 50 may be omitted.

The above description is merely exemplary, and as long as the structure of Claim 1 is provided, the other structures may be suitably modified. For example, in the above description, the first orifice member 32f and the second orifice member 32s are formed as separate members. Alternatively, a configuration may be employed in which the first orifice member 32f and the second orifice member 32s are not divided, but are formed as a single component. With such a configuration, the single component may be formed, for example, using a 3D printer. Further, in the above description, the width of the crosspiece 44 is set constant regardless of the position in the radial direction. Alternatively, the width of the crosspiece 44 may be varied depending on the position in the radial direction. For example, the width of the crosspiece 44 may be gradually increased toward the outer circumference in the radial direction. In such a case, the placement spacing of the protrusions 50 may be varied depending on the position in the radial direction of the protrusion group 52. That is, when the width of the crosspiece 44 at a radius r is y(r), the diameter of the protrusion 50 belonging to the protrusion group 52 positioned at the radius r is a(r), and the placement spacing is x(r), the protrusions 50 may be placed to satisfy the conditions y(r) ≥ 2x(r) + 2a(r) and x(r) > a(r).

### REFERENCE SIGNS LIST

10 liquid-sealed mount, 12 body, 14 body rubber, 16 diaphragm, 18 housing, 20 fastening portion, 22f first liquid chamber, 22s second liquid chamber, 30 orifice unit, 32 orifice member, 33 passage, 34 membrane, 36 tubular portion, 38 flange, 40 partitioning wall, 42 inlet/outlet, 44 crosspiece, 46 connection ring, 50 protrusion, 52 protrusion group.

## Claims

1. A liquid-sealed mount (10) comprising:
a body (12) having one end closed by a body rubber (14) and the other end closed by a diaphragm (16);
a membrane (34) that partitions an inside of the body (12) into a first liquid chamber (22f) and a second liquid chamber (22s);
a plurality of crosspieces (44) placed on both sides in an axial direction of the membrane (34) with the membrane (34) therebetween, and extending radially with a predetermined point as a center; and
a passage (33) that communicates the first liquid chamber (22f) and the second liquid chamber (22s), wherein
the membrane (34) has at least one protrusion group (52) formed from a plurality of protrusions (50) placed on a circle which is approximately concentric with the predetermined point, and
the at least one protrusion group (52) satisfies a condition of y > 2x + 2a when an average value of spacing between protrusions (50) adjacent in a circumferential direction is x, a diameter of the protrusion (50) is a, and a width of the crosspiece (44) is y.

2. The liquid-sealed mount (10) according to claim 1, wherein
in each of the at least one protrusion group (52), the diameter a of the protrusion (50) is smaller than the average value x of the spacing between the protrusions (50).

3. The liquid-sealed mount (10) according to claim 1 or 2, wherein
the at least one protrusion group (52) includes a first protrusion group (52) and a second protrusion group (52) positioned at an outer side in a radial direction relative to the first protrusion group,
the width y of each of the plurality of crosspieces (44) gradually increases toward the outer side in the radial direction, and
the average value x of the spacing between the protrusions (50) in the second protrusion group (52) is larger than the average value x of the spacing between the protrusions (50) in the first protrusion group (52).

4. The liquid-sealed mount (10) according to any one of claims 1 to 3, wherein
the membrane (34) further includes a plurality of protrusions (50) which are randomly placed.

5. The liquid-sealed mount (10) according to any one of claims 1 to 4, further comprising:
an orifice unit (30), wherein
the orifice unit (30) comprises:
a tubular portion (36), an inside of which is divided by the membrane (34);
two flanges (38) each extending from an outer circumferential surface of the tubular portion (36) toward an outer side in a radial direction, and forming the passage (33) therebetween;
a partitioning wall (40) which divides the passage (33) in a circumferential direction;
an inlet/outlet formed on each of the two flanges (38), and communicating the passage (33) and the liquid chamber (22f, 22s); and
the plurality of crosspieces (44) extending from the tubular portion (36) in the radial direction.
